# EUROPÄISCHE PATENTSCHRIFT

(11) **EP 0 826 298 B1**
(45) Veröffentlichungstag und Bekanntmachung des Hinweises auf die Patenterteilung: **06.03.2002**
(21) Anmeldenummer: 97114531.3
(22) Anmeldetag: 22.08.1997
(51) Int. Cl.: A01G 1/00, C09K 17/00

(54) **Pflanzsubstrat**
Plant substrate
Substrat de plantes

(30) Priorität: 27.08.1996 DE 19634478; 03.04.1997 DE 19713690
(43) Veröffentlichungstag der Anmeldung: 04.03.1998
(73) Patentinhaber: Adler, Hannelore, 45329 Essen (DE); Adler, Berthold, Dipl.-Ing., 45329 Essen (DE)
(72) Erfinder: Adler, Hannelore, 45329 Essen (DE); Adler, Berthold, Dipl.-Ing., 45329 Essen (DE)
(74) Vertreter: Gesthuysen, von Rohr & Eggert

(56) Entgegenhaltungen:
- WO-A-91/13541
- DE-A- 4 401 284
- DE-A- 4 418 499
- FR-A- 2 666 830

## Beschreibung

Die vorliegende Erfindung betrifft ein Pflanzsubstrat nach dem Oberbegriff des Anspruchs 1, ein Verfahren zur Herstellung eines Pflanzsubstrats nach dem Oberbegriff des Anspruchs 8 sowie eine Verwendung des Pflanzsubstrats zur Herstellung einer hochbelastbaren Rasenfläche.

Im Hinblick auf das gestiegene Umweltbewußtsein werden zunehmend begrünbare Flächen gegenüber weitgehend oberflächenwasserdicht geschlossenen Flächen beim Erstellen von begehbaren und befahrbaren Wegen und Straßen od. dgl. bevorzugt.

Bei einem üblichen Rasen wächst das Gras in einem Oberboden, der ansonsten auch als Mutterboden bezeichnet wird und gemäß der VOB Teil C: Allgemeine Technische Vertragsbedingungen für Bauleistungen (ATV), Erdarbeiten - DIN 18300 definiert ist. Ein derartiger Rasen ist jedoch nicht dauerhaft begehbar oder gar befahrbar, da er gerade bei feuchter Witterung zu weich ist.

Zur Modifizierung des Rasens wurde daher bereits vorgeschlagen, sogenannte Rasensteine zu verwenden, die spezielle Formen haben und derart eben verlegt werden, daß ein meist regelmäßiges Muster an Durchbrechungen für den Rasen entsteht. Eine derartige Rasenfläche ist zwar verhältnismäßig hochbelastbar, jedoch ist ein hoher Herstellungsaufwand erforderlich, und der Anteil der Rasenfläche an der Gesamtfläche ist letztendlich verhältnismäßig gering.

Alternativ ist die Verwendung von sogenanntem Schotterrasen bekannt, vgl. Zeitschrift "DAS GARTENAMT", Artikel "Schotterrasen", 5/92, Seiten 346 bis 352, der den Ausgangspunkt der vorliegenden Erfindung bildet. Hierbei wird eine Schicht aus Schotter mit einer Schicht aus Oberboden entweder überdeckt oder vermischt, wobei der Oberboden oftmals eingeschlämmt wird. Der Schotter weist eine Körnung von 0 bis 32 mm auf oder ist noch gröber. Die Praxis hat jedoch gezeigt, daß sich so kein optimales Pflanzsubstrat für eine einfache und dauerhafte Begrünung, insbesondere mit Rasen, ergibt.

Die DE - C- 44 18 499 offenbart ein Pflanzsubstrat, das neben Nährstoffträgern ein Korngerüst aus Schmelzkammergranulat, das bei der Steinkohleverbrennung entsteht, aufweist. Insbesondere liegen die Korngrößen des Schmelzkammergranulats zwischen 0,06 und 16 mm. Dieses Schmelzkammergranulat stellt kein gebrochenes mineralisches Material dar, da eine Granalie ein Agglomarat von zumeist pulverförmigen Partikeln ist, Mineralien hingegen durch natürliche Vorgänge entstandene Festkörper sind.

Die DE - A - 44 01 284 offenbart die Verwendung von pulverförmigen, magmatischem Gestein zur Bodenverfestigung. Zusätzlich kann aus physikalischen Gründen zu dem feinkörnigen magmatischem Gestein ein grobkörniges magmatisches Gestein in einer Korngrößen-Bandbreite von 1 bis 32 mm vorgesehen sein, also Schotter zur Bodenverfestigung verwendet werden.

Die DE - A - 34 39 224 befaßt sich mit einer Vegetationsschicht aus einem mineralischen Gemenge, dem Zuschläge beigemischt werden, welche unter der Einwirkung von Feuchtigkeit Salze und insbesondere Kalk abgeben. Hierdurch wird ein Verbackungsprozeß bewirkt, der zu einer Selbstverfestigung des Gemenges führt. Vorzugsweise stammen die Zuschläge aus Schlacken. Es können jedoch auch Bauschutt, Beton, bitumengebundene Materialien und allgemei-ne Schottermaterialien sowie Stahl- und Roheisenreste verwendet werden. Wesent-lich ist, daß die eingebaute Vegetationsschicht durch chemische Bindung verfestigt wird.

Schließlich offenbart die JP 4-46990 den Zusatz von pulverisiertem Gestein als Bodenverbesserer, um das Keimen und die Wurzelbildung zu unterstützen.

Die WO - A - 91/13541 offenbart ein Pflanzsubstrat, bei dem Splittkörner in einer Erde verteilt sind. Beispielsweise ist eine Korngröße von 1 bis 8 mm offenbart. Die Splitkörner sind mit einem Feuchtigkeitsabsorber - insbesondere Hydrogel und Wasser - beschichtet. Eine unmittelbare Ummantelung mit Erde ist nicht offenbart.

Die FR - A - 2 666 830 offenbart eine Mischung aus Sand und Split.

Der Erfindung liegt die Aufgabe zugrunde, ein Pflanzsubstrat, ein Verfahren zur Herstellung des Pflanzsubstrats und eine Verwendung des Pflanzsubstrats anzugeben, die die Herstellung einer hochbelastbaren, sehr einfach und dauerhaft begrünbaren Fläche, insbesondere einer Rasenfläche, auf besonders einfache Weise bei verhältnismäßig geringem Aufwand ermöglichen.

Die genannte Aufgabe wird durch ein Pflanzsubstrat gemäß Anspruch 1 bzw. ein Verfahren nach Anspruch 8 gelöst. Anspruch 9 gibt eine bevorzugte Verwendung an. Vorteilhafte Weiterbildungen sind Gegenstand der Unteransprüche.

Insbesondere ist vorgesehen, daß das Oberboden enthaltende Pflanzsubstrat mindestens 30 Vol.%, vorzugsweise mehr als 50 Vol.% Splitt, mit einer maximalen Korngröße von 22 mm oder von sogar nur 16 mm enthält, wobei der Splitt mit dem Oberboden vermischt ist.

Eine wesentliche Idee der Erfindung liegt darin, einen Oberboden bzw. Mutterboden mit einem hohen Anteil an Splitt gleichmäßig zu vermischen. Unter Oberboden ist hierbei eine Bodenart, wie in der bereits erwähnten DIN 18300 beschrieben, oder eine Bodenart mit vergleichbaren Eigenschaften, die insbesondere für die Kultivierung von Rasen geeignet ist, zu verstehen.

Überraschenderweise hat sich gezeigt, daß ein derartiges Pflanzsubstrat außergewöhnlich gut für die Herstellung einer hochbelastbaren, begrünten Fläche, wie einen Rasen, geeignet ist. Trotz des verhältnismäßig hohen Splittanteils kann ein sehr dichter Rasen mit diesem Pflanzsubstrat erhalten werden.

Unter Splitt ist hierbei ein gebrochenes, hochgradig witterungsbeständiges, mineralisches Material hoher Dichte zu verstehen, wobei Splitt im Vergleich zu Schotter eine geringere mittlere bzw. maximale Korngröße aufweist. Die Kombination von Oberboden und Splitt führt zu einem Pflanzsubstrat, das sehr gut verdichtet werden kann und dann eine sehr hohe Belastbarkeit zeigt, also insbesondere begehbar und befahrbar ist, ohne daß selbst bei nasser Witterung die Oberfläche merklich eingedrückt wird. Im Gegensatz zu Schotterrasen reicht also der feinkörnigere Splitt aus, um eine hochbelastbare Deckschicht realisieren zu können, deren vegetationstechnische Eigenschaften denen des Schotterrasens weit überlegen sind.

Weiterhin hat sich gezeigt, daß bei der Herstellung eines Rasens mit dem vorschlagsgemäßen Pflanzsubstrat ein wesentlich schnelleres Keimen des Grassamens und Anwachsen der Gräser im Vergleich zu herkömmlichen Rasenkulturen erzielt werden kann. Dies erklärt sich durch die gegenüber herkömmlichen Böden wesentlich erhöhte Wärmekapazität des Splitts, die zu einer gleichmäßigeren Bodentemperatur führt, so daß beim nächtlichen Absinken der Außentemperatur eine erhöhte Bodentemperatur erhalten bleibt, die das Anwachsen wesentlich beschleunigt.

Weiter führt das vorschlagsgemäße Pflanzsubstrat zu einer unversiegelten Fläche, die eine natürliche Entwässerung aufgrund der hohen Wasserdurchlässigkeit ermöglicht, so daß zumeist auf zusätzliche Drainagemaßnahmen verzichtet werden kann.

Ein weiterer wesentlicher Vorteil liegt darin, daß das vorschlagsgemäße Pflanzsubstrat sehr einfach einzubauen und zu verdichten ist, so daß ohne großen Aufwand und mit geringen Herstellungskosten eine begrünte Fläche, wie ein Rasen, herstellbar ist.

Zudem kann das erfindungsgemäße Pflanzsubstrat ausschließlich aus natürlichen Stoffen hergestellt werden, so daß ein äußerst umweltfreundliches Produkt erhalten wird und eine Gewässerbelastung ausgeschlossen ist.

Ein mit dem vorgeschlagenen Pflanzsubstrat hergestellter Rasen läßt sich beispielsweise sehr vorteilhaft für Parkplätze oder Fahrstraßen auf Golfplätzen verwenden, da selbst bei hoher Belastung und regelmäßiger Benutzung dauerhaft eine gleichmäßig begrünte Fläche erhalten bleibt.

In vorteilhafter Ausgestaltung enthält das Pflanzsubstrat maximal 90 Vol.% Splitt und vorzugsweise im wesentlichen 60 bis 80 Vol.% Splitt. So ergibt sich ein ausgezeichneter Kompromiß aus guter Tragfähigkeit und überraschend dichtem Bewuchs.

Es hat sich als vorteilhaft erwiesen, wenn der Splittanteil insgesamt im wesentlichen Korngrößen aus dem Bereich von 2 bis 22 mm und vorzugsweise von 5 bis 16 mm aufweist. Beispielsweise kann ein Splitt mit der üblichen Körnung 8-11 mm oder 11-16 mm oder insbesondere eine Mischung aus diesen beiden Sieblinien verwendet werden. So ergibt sich ein Pflanzsubstrat, das auch bei nicht allzu großer Schichtdikke sehr gut verfestigt werden kann und eine gute Wasserdurchlässigkeit aufweist.

Es hat sich als besonders vorteilhaft erwiesen, wenn der Splitt im wesentlichen eine kubische Kornform aufweist.

In einer bevorzugten Ausführungsform wird mehrfach gebrochener Splitt - auch als Edelsplitt bezeichnet - verwendet, der eine weitgehend kubische Kornform aufweist und mit dem Oberboden besonders gut vermischbar ist.

Vorzugsweise ist der Splitt aus Gestein, welches ggf. auch aus unterschiedlichen Lagerstätten stammen kann, und insbesondere aus Naturstein, wie Grauwacke, Granit, Basalt, Porhyr, Diabas oder Kalkstein, hergestellt. So ergibt sich eine sehr witterungsbeständige und feste Splittkomponente, die dem Pflanzsubstrat eine hohe Dauerhaltbarkeit auch bei hoher Belastung verleiht.

Gemäß einer erfindungsgemäßen Ausführungsform des Pflanzsubstrats sind die Splittkörner größtenteils zumindest teilweise mit dem Oberboden und ggf. weiteren Beimengungen ummantelt. Hierbei ist das Pflanzsubstrat insbesondere als ein granulatartiges Schüttgut in Form einer im wesentlichen gleichmäßigen Mischung der Bestandteile ausgebildet. Dieses Pflanzsubstrat läßt sich aufgrund seiner granulatartigen Konsistenz sehr einfach weiterverarbeiten und führt auch im eingebauten Zustand zu einer weitgehend gleichmäßigen Anordnung und Verteilung der Splittkörner und des Bodenanteils sowie sonstiger Beimengungen, so daß ideale Vegetationsbedingungen für eine Bepflanzung, wie Rasen, im eingebauten Zustand des Pflanzsubstrats erreicht werden.

Ein möglichst gleichmäßiges Anwachsen des Oberbodens an die einzelnen Splittkörner und somit eine sehr gleichmäßige Vermischung werden dadurch erreicht, daß der Oberboden in etwa erdfeuchtem Zustand mit dem Splitt vermischt ist. Zur Aufbereitung wird dabei insbesondere ein Zwangsmischer verwendet, um ein Festhaften des Bodens an Wandungen des Mischers zu minimieren.

Um gute Draineigenschaften des Pflanzsubstrats auch bei hoher Verdichtung sicherzustellen, besteht der Oberboden vorzugsweise im wesentlichen aus leicht bis mittelschwer lösbaren Bodenarten, wie in der DIN 18300, die bereits eingangs erwähnt worden ist, aufgeführt.

Das vorschlagsgemäße Pflanzsubstrat enthält bei Bedarf Beimengungen mit Nährstoffeigenschaften, wie kompostierbares Material, Humus und/oder Dünger, um das Wachstum von Pflanzen auf dem Pflanzsubstrat zu unterstützen.

Alternativ oder zusätzlich kann eine wasserspeichernde Komponente, wie hochkapilare Stoffe, kalksteinhaltige Stoffe, Katzenstreu oder insbesondere Bimsstein, als Beimengung dem Pflanzsubstrat zugegeben bzw. untergemischt werden.

Ein bevorzugter Schichtaufbau zur Bepflanzung, insbesondere mit Rasen, zeichnet sich dadurch aus, daß eine Deckschicht aus dem vorgenannten Pflanzsubstrat gebildet ist, deren Dicke mindestens 5 cm, vorzugsweise etwa 10 cm, beträgt. So werden die gleichen, bereits im Zusammenhang mit dem erfindungsgemäßen Pflanzsubstrat aufgeführten Vorteile erhalten. Insbesondere wird mit diesem verhältnismäßig dünnen Schichtaufbau bereits eine sehr hoch belastbare Unterlage erhalten, die sehr einfach mit Gras zur Bildung eines dichten Rasens bepflanzbar ist.

Ein besonders hochbelastbarer Schichtaufbau ergibt sich dadurch, daß die Deckschicht eine Tragschicht aus einem verdichteten Mineralgemisch überdeckt. Dieses Mineralgemisch weist beispielsweise eine Körnung von 0 bis 45 mm auf und wird aufgrund seiner guten Trageigenschaften im verdichteten Zustand auch als Mineralbeton bezeichnet. Jedoch kann die Tragschicht auch eine Körnung von 0 bzw. 2 bis 22 mm aufweisen. Wenn dem Mineralgemisch der Anteil an abschlämmbaren Bestandteilen (bis etwa 0,063 mm Korngröße) fehlt, ergeben sich besonders günstige Entwässerungseigenschaften. Gleiches gilt für die mineralische bzw. Splittkomponente der Deckschicht bzw. das Pflanzsubstrat.

Ein bevorzugtes Verfahren zur Herstellung von Pflanzsubstrat sieht vor, daß Oberboden zusammen mit evtl. Beimengungen mit Splitt und ggf. unter Zugabe von Wasser vermischt wird, so daß die Splittkörner größtenteils zumindest teilweise mit dem Oberboden einschließlich der ggf. vorhandenen Beimengungen ummantelt werden. Hierbei wird vorzugsweise ein Zwangsmischer eingesetzt, um ein Anhaften der Bodenkomponente an Wandbereichen des Mischers zu unterbinden. Es hat sich gezeigt, daß der Oberboden am besten an dem Splitt anhaftet, wenn etwa erdfeuchter Oberboden mit weitgehend trockenem Splitt vermischt wird.

Das genannte Verfahren ist sehr einfach durchführbar, da lediglich die Bestandteile des vorgeschlagenem Pflanzsubstrats miteinander vermischt werden müssen, was je nach Leistungsfähigkeit des verwendeten Mischers sehr schnell erfolgen kann, und keine weiteren Herstellungsschritte erforderlich sind.

Eine hoch belastbare Rasenfläche wird vorzugsweise dadurch gebildet, daß das vorgenannte Pflanzsubstrat flächig verteilt, anschließend mit Grassamen bestreut und abschließend verdichtet wird. So kann auf einfache Weise eine hoch belastbare Rasenfläche erhalten werden, wobei lediglich je nach Witterung noch zusätzlich eine Beregnung erforderlich sein kann. Insbesondere kann diese Herstellung maschinell durchgeführt werden, wobei mit entsprechenden Maschinen auch eine Herstellung der vorschlagsgemäßen Rasenfläche in einem Arbeitsgang möglich ist.

Alternativ wird der Samen, wie Grassamen, dem Pflanzsubstrat bereits vor dem Einbau untergemischt.

Nachfolgend wird die Erfindung anhand der Zeichnung eines Ausführungsbeispiels näher erläutert. Es zeigen:
- Fig. 1: einen Schnitt durch ein granulatartiges Korn eines vorschlagsgemäßen Pflanzsubstrats und
- Fig. 2: einen schematischen Schnitt durch einen vorschlagsgemäßen Schichtaufbau.

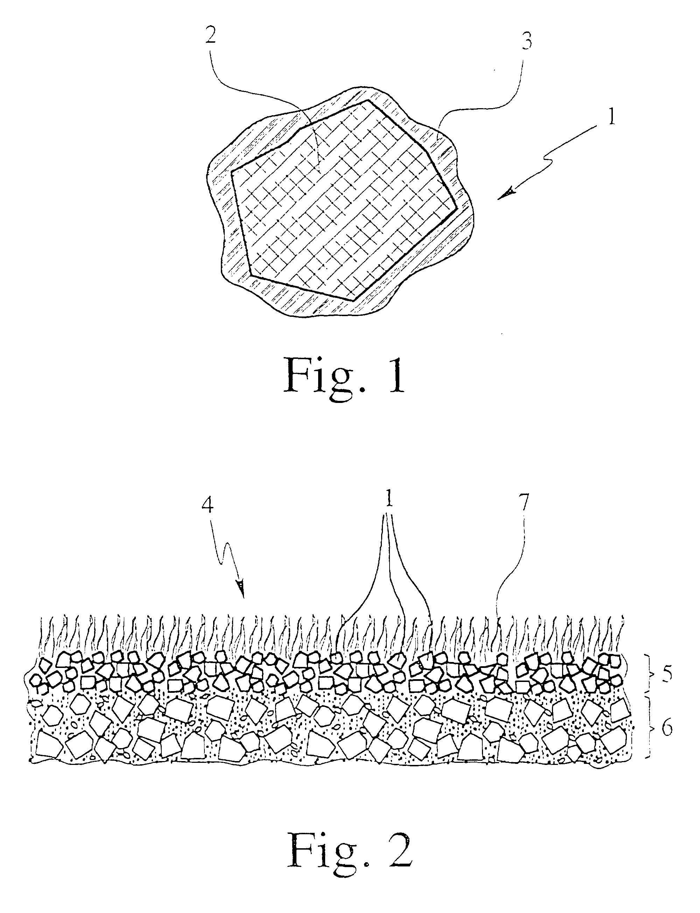

In Fig. 1 ist ein vorschlagsgemäßes Pflanzsubstrat 1 beispielhaft durch einen Schnitt durch ein einziges Korn dargestellt. Das Pflanzsubstrat 1 zeichnet sich dadurch aus, daß Splitt 2 mit Bodenmaterial, nämlich einem Oberboden 3 gemäß der bereits erwähnten DIN 18300, zusammen mit eventuellen Beimengungen, wie kompostierbarem Material, einer wasserspeichernden Komponente o. dgl., vermischt ist. Hierbei ummantelt der ansonsten auch als Mutterboden bezeichnete Oberboden 3 die einzelnen Splittkörner zumindest teilweise oder ganz, wie in Fig. 1 dargestellt, so daß das Pflanzsubstrat 1 insgesamt ein granulatartiges Schüttgut bildet, das vorzugsweise vorgemischt, also einbaufertig angeliefert wird.

Zur Herstellung ist beim dargestellten und beschriebenen Ausführungsbeispiel ein Edelsplitt aus Grauwacke, also ein mindestens zweifach gebrochener Splitt 2, der Körnung 11/16 mm mit dem erdfeuchten Oberboden 3 in einem Volumenmischverhältnis von etwa 3 zu 1 mit Hilfe eines Zwangsmischers solange vermischt worden, bis die meisten Splittkörner zumindest teilweise mit dem Oberboden 3 ummantelt sind. Der Volumenanteil des Splitts 2 am Pflanzsubstrat 1 beträgt hier etwa 75 %. Jedoch sind auch abweichende Volumenanteile je nach gewünschter Belastbarkeit und Wasserdurchlässigkeit des sich ergebenden Pflanzsubstrats 1 möglich, wobei vorzugsweise der Anteil an Splitt bzw. mineralischem Material mit Körnungen aus dem Bereich von 2 bis 22 mm, insbesondere 2 bis 16 mm, 40 bis 80 Vol.% am Pflanzsubstrat 1 beträgt.

Fig. 2 illustriert anhand eines Schnittes durch einen Schichtaufbau 4 beispielhaft, wie das Pflanzsubstrat 1 verwendet werden kann. Es bildet beim Schichtaufbau 4 eine Deckschicht 5, die eine Tragschicht 6 überdeckt.

Die Tragschicht 6 ist beim Darstellungsbeispiel durch ein verdichtetes Mineralgemisch gebildet, das beispielsweise eine Körnung bis zu 45 mm aufweist und oftmals auch als Mineralbeton bezeichnet wird. Dieses Material zeichnet sich durch eine hohe Tragfähigkeit bei guter Wasserdurchlässigkeit aus. Jedoch kann die Tragschicht 6 je nach Anforderungen auch einem anderen Material bestehen.

Die Deckschicht 5 aus dem Pflanzsubstrat 1 weist beim Darstellungsbeispiel eine Dikke von etwa 10 cm auf. Jedoch kann diese Dicke je nach Bepflanzung und Verfügbarkeit des Pflanzsubstrats 1 stark variieren, wobei lediglich eine Mindestdicke von etwa 5 cm einzuhalten ist.

Das Pflanzsubstrat 1 wird vorzugsweise gleichmäßig auf der Tragschicht 6 verteilt. Anschließend wird bei einer Bepflanzung mit Gras zur Bildung eines Rasens 7, wie in Fig. 2 dargestellt, Grassamen auf die noch nicht verdichtete Deckschicht aufgebracht, wobei beim bevorzugten Darstellungsbeispiel Grassamen für einen sehr belastbaren und haltbaren Spiel- und Sportrasen mit 0,5 bis 1 kg pro 10 m² aufgestreut wird. Bei der anschließenden Verdichtung, die beispielsweise durch eine Rüttelplatte erfolgt, wird der Grassamen in die Deckschicht 5 eingerüttelt und kann sich derart mit dem Oberboden 3 verbinden, daß ein guten Anwachsen erzielt wird.

Bei dem beschriebenen Ausführungsbeispiel konnte bereits nach vier Tagen ein Auskeimen und Wachsen des Grases trotz widriger Witterungsbedingungen beobachtet werden. Innerhalb kurzer Zeit bildete sich dann ein dichter Rasen 7 aus.

Selbstverständlich kann die vorgenannte Körnung des Splitts 2 je nach Bedarf variiert werden, wobei auch von den üblichen Sieblinien, wie 2/5, 5/8, 8/11 und 11/16, abgewichen werden kann. Gerade für dünnere Deckschichten 5 eignen sich feinere Körnungen des Splitts 2.

Der auf dem beschriebenen Pflanzsubstrat 1 kultivierte Rasen 7 ist sehr dicht und gegen häufiges Betreten und Befahren sehr unempfindlich. Des weiteren ist die vom Pflanzsubstrat 1 gebildete Deckschicht 5 sehr belastbar, so daß ein Befahren der Deckschicht 5 selbst nach langanhaltenden Regenfällen keine sichtbaren Spuren hinterläßt. Des weiteren ist die Drainfähigkeit der Deckschicht 5 und des gesamten Schichtaufbaus 4 ausgezeichnet.

Gemäß einer bevorzugten Ausführungsalternative wird der Grassamen oder sonstiger Samen bei der Herstellung des Pflanzsubstrats 1 gleich mit eingemischt. So wird eine gleichmäßige Verteilung des Samens sichergestellt und ein einbaufertiges Gemisch erhalten, so daß der Aufwand beim Einbau minimal ist.

Besonders günstig für das Wachstumsverhalten von in dem Pflanzsubstrat 1 kultivierten Pflanzen ist es, wenn das Pflanzsubstrat 1 zumindest im wesentlichen eine maximale Korngröße von 30 mm, vorzugsweise von 22 bzw. 16 mm. aufweist. Insbesondere ist der Anteil an mineralischem Material größerer Korngröße auf 2 Vol.%, vorzugsweise auf 1 Vol.%, beschränkt bzw. im wesentlichen vernachlässigbar.

Gemäß einer alternativen, bevorzugten Ausführungsform enthält das Pflanzsubstrat 1 60 bis 80 Vol.% Splitt 2, wobei die Splittkomponente vorzugsweise mit im wesentlichen gleichen Volumenanteilen aus den üblichen Sieblinien der Körnungen 5 bis 8 mm, 8 bis 11 mm und 11 bis 16 mm zusammengestellt ist, der Korngrößenbereich der Splittkomponente also zumindest im wesentlichen 5 bis 16 mm entspricht. Bei diesem Ausführungsbeispiel beträgt der Anteil an Mutterboden 8 bis 20 Vol.%. Weiter kann das Pflanzensubstrat 1 einen Anteil von jeweils bis zu 10 Vol.% an Sand und Bimsstein enthalten. Bei vorherigem Untermischen eines Rasendüngers, wie eines sogenannten Starter-Düngers, und von Grassamen ergibt sich ein einbaufertiges Pflanzensubstrat 1, das hervorragende Eigenschaften hinsichtlich Belastbarkeit und Rasenwachstum aufweist.

## Patentansprüche

1. Pflanzsubstrat, insbesondere für Rasen, enthaltend Oberboden und gebrochenes mineralisches Material,
**dadurch gekennzeichnet,**
**daß** das Pflanzsubstrat (1) als gebrochenes mineralisches Material mindestens 30 Vol.% Splitt (2) mit Korngrößen aus dem Bereich von 2 bis 22 mm enthält, wobei der Splitt (2) mit dem Oberboden (3) vermischt ist und die Splittkörner des Splitts (2) größtenteils zumindest teilweise mit dem Oberboden (3) ummantelt sind.

2. Pflanzsubstrat nach Anspruch 1, **dadurch gekennzeichnet, daß** das Pflanzsubstrat (1) maximal 90 Vol.% Splitt (2) und vorzugsweise 60 bis 80 Vol.% Splitt (2) mit Korngrößen aus dem Bereich 2 bis 22 mm, insbesondere 5 bis 16 mm, enthält und/oder höchstens 5 Vol.%, vorzugsweise höchstens 2 Vol.%, an mineralischem Material mit einer Korngröße größer 22 mm enthält.

3. Pflanzsubstrat nach Anspruch 1 oder 2, **dadurch gekennzeichnet, daß** der Splitt (2) Korngrößen aus dem Bereich von 5 bis 16 mm aufweist und/oder aus Gestein, ggf. aus unterschiedlichen Lagerstätten, und vorzugsweise aus Naturstein, wie Grauwacke, Granit, Basalt, Porphyr, Diabas oder Kalkstein, hergestellt ist.

4. Pflanzsubstrat nach einem der voranstehenden Ansprüche, **dadurch gekennzeichnet, daß** der Splitt (2) eine kubische Kornform aufweist und/oder mehrfach gebrochen ist.

5. Pflanzsubstrat nach einem der voranstehenden Ansprüche, **dadurch gekennzeichnet, daß** das Pflanzsubstrat (1) als vorzugsweise granulatartiges Schüttgut ausgebildet und/oder eine gleichmäßige Mischung aus den Bestandteilen ist.

6. Pflanzsubstrat nach einem der voranstehenden Ansprüche, **dadurch gekennzeichnet, daß** der Oberboden (3) in erdfeuchtem Zustand mit dem Splitt (2) vermischt ist und/oder leicht bis mittelschwer lösbare Bodenarten enthält.

7. Pflanzsubstrat nach einem der voranstehenden Ansprüche, **dadurch gekennzeichnet, daß** Beimengungen mit Nährstoffeigenschaften, wie Humus, Kompost und/oder Dünger, eine wasserspeichernde Komponente, insbesondere Bimsstein, und/oder Samen, insbesondere Grassamen, untergemischt sind.

8. Verfahren zur Herstellung eines Pflanzsubstrats, insbesondere nach einem der voranstehenden Ansprüche, bei dem Oberboden (3) mit gebrochenem, mineralischem Material vermischt wird, **dadurch gekennzeichnet, daß** der Oberboden (3) zusammen mit eventuellen Beimengungen und ggf. Samen mit mindestens 30 Vol.% Splitt (2) als gebrochenes, mineralisches Material und ggf. unter Zugabe von Wasser vermischt wird, so daß die meisten Splittkörner zumindest teilweise mit dem Oberboden (3) unter Bildung eines granulatartigen Schüttguts ummantelt werden.

9. Verwendung des Pflanzsubstrats (1) nach einem der voranstehenden Ansprüche zur Herstellung einer hochbelastbaren Rasenfläche, **dadurch gekennzeichnet, daß** das Pflanzsubstrat (1) flächig verteilt, anschließend ggf. mit Grassamen bestreut und abschließend verdichtet wird.

## Claims

1. Plant substrate, in particular for lawn, containing topsoil and broken mineral material,
**characterised in**
**that** the plant substrate (1) comprises as a broken mineral material at least 30 vol.% of chippings (2) with particle sizes ranging from 2 to 22 mm, wherein the chippings (2) are mixed with the topsoil (3) and wherein the particles of the chippings (2) are predominantely at least partially encased by the topsoil (3).

2. Plant substrate according to claim 1, **characterised in that** the plant substrate (1) comprises max. 90 vol.% chippings (2) and preferably 60 to 80 vol.% chippings (2) with particle sizes ranging from 2 to 22 mm, in particular from 5 to 16 mm and/or comprising, at the most, 5 vol.%, preferably, at the most, 2 vol.% of mineral material with a particle size larger than 22 mm.

3. Plant substrate according to claim 1 or 2, **characterised in that** the chippings (2) comprise particle sizes ranging from 5 to 16 mm and or that the chippings (2) are made of rock, if applicable of different deposits, and are preferably made of natural stone such as greywacke, granite, basalt, porphyry, diabase or limestone.

4. Plant substrate according to any one of the preceding claims, **characterised in that** the chippings (2) are of cuboid particle shape and/or multiply-broken.

5. Plant substrate according to any one of the preceding claims, **characterised in that** the plant substrate (1) is preferably a granulate-like bulk material and/or a homogenous mixture of the components.

6. Plant substrate according to any one of the preceding claims, **characterised in that** the topsoil (3) is mixed with the chippings (2) when it is slightly moist and/or comprises soil types of easy to average solubility.

7. Plant substrate according to any one of the preceding claims, **characterised in that** it comprises admixtures with nutrient characteristics such as humus, compost and/or fertiliser, a water-storing component, in particular pumice stone and/or seed, in particular grass seed.

8. Method for producing a plant substrate, in particular according to one of the preceding claims in which topsoil (3) is mixed with broken mineral material, **characterised in that** the topsoil (3) together with any admixtures and, if applicable, seed, is mixed with at least 30 vol.% of chippings (2) as a broken mineral material and, if applicable, is mixed while adding water so that most of the chipping particles are at least partially encased by the topsoil (3), forming a granulate-like bulk material.

9. Use of the plant substrate (1) according to any one of the preceding claims for producing a highly load-resistant lawn area, **characterised in that** the plant substrate (1) is distributed two-dimensionally, then, if applicable,sprinkled with grass seed and subsequently compressed.

## Revendications

1. Substrat végétal, en particulier pour des pelouses, contenant une couche supérieure et une matière minérale broyée, **caractérisé en ce que** le substrat végétal (1) contient, à titre de matière minérale broyée, des pierres concassées (2) à concurrence de 30 % en volume, dont les granulométries se situent dans le domaine de 2 à 22 mm, dans lequel les pierres concassées (2) sont mélangées avec la couche supérieure (3) et les grains des pierres concassées (2) sont pour la plupart au moins en partie recouverts avec la couche supérieure (3).

2. Substrat végétal selon la revendication 1, **caractérisé en ce que** le substrat végétal (1) contient des pierres concassées (2) au maximum à concurrence de 90 % en volume et de préférence à concurrence de 60 à 80 % en volume, dont les granulométries se situent dans le domaine de 2 à 22 mm, en particulier de 5 à 16 mm, et/ou contient de la matière minérale au maximum à concurrence de 5 % en volume, de préférence au maximum à concurrence de 2 % en volume, dont la granulométrie est supérieure à 22 mm.

3. Substrat végétal selon la revendication 1 ou 2, **caractérisé en ce que** les pierres concassées (2) présentent des granulométries se situant dans le domaine de 5 à 16 mm et/ou sont fabriquées à partir de roches, le cas échéant provenant de gisements différents, et de préférence à partir de pierre naturelle telle que du grès des houillères, du granit, du basalte, du porphyre, de la diabase ou du calcaire.

4. Substrat végétal selon l'une quelconque des revendications précédentes, **caractérisé en ce que** les pierres concassées (2) présentent une forme granulaire cubique et/ou ont été broyées à plusieurs reprises.

5. Substrat végétal selon l'une quelconque des revendications précédentes, **caractérisé en ce que** le substrat végétal (1) est réalisé de préférence sous la forme d'un produit en vrac en forme de granulés et/ou représente un mélange uniforme des constituants.

6. Substrat végétal selon l'une quelconque des revendications précédentes, **caractérisé en ce que** la couche supérieure (3) est mélangée, à l'état tel qu'elle présente la consistance d'une terre humide, avec les pierres concassées (2) et/ou contient des types de sols dont la désagrégation est aisée à moyennement aisée.

7. Substrat végétal selon l'une quelconque des revendications précédentes, **caractérisé en ce qu'**on incorpore des additifs possédant des propriétés de substances nutritives, tels que de l'humus, du compost et/ou de l'engrais, un composant faisant office de réservoir d'eau tel que de la pierre ponce, et/ou des semences, en particulier des semences de pelouse.

8. Procédé pour la fabrication d'un substrat végétal, en particulier selon une des revendications précédentes, dans lequel on mélange la couche supérieure (3) avec une matière minérale broyée, **caractérisé en ce qu'**on mélange la couche supérieure (3), de manière conjointe avec des additifs éventuels et, le cas échéant, avec des semences, avec des pierres concassées (2) à concurrence d'au moins 30 % en volume, à titre de matière minérale broyée, et le cas échéant en ajoutant de l'eau, de telle sorte que la plupart des grains des pierres concassées sont recouverts au moins en partie avec la couche supérieure (3) en formant un produit en vrac sous la forme de granulés.

9. Utilisation du substrat végétal (1) selon l'une quelconque des revendications précédentes pour la fabrication d'une surface de pelouse qui peut être soumise à une charge élevée, **caractérisée en ce qu'**on répartit le substrat végétal (1) en couche, sur lequel on répand ensuite le cas échéant des semences de pelouse et ensuite que l'on comprime.
